**Europäisches Patentamt**

**European Patent Office**

**Office européen des brevets**

(19)

(11) Veröffentlichungsnummer : **0 338 500 B1**

(12)

# EUROPÄISCHE PATENTSCHRIFT

(45) Veröffentlichungstag der Patentschrift :
**01.07.92 Patentblatt 92/27**

(21) Anmeldenummer : **89106907.2**

(22) Anmeldetag : **18.04.89**

(51) Int. Cl.⁵ : **B65G 9/00**

(54) **Handhängebahn für die innerbetriebliche Hängeförderung in der Bekleidungsindustrie.**

(30) Priorität : **18.04.88 DE 3812852**

(43) Veröffentlichungstag der Anmeldung :
**25.10.89 Patentblatt 89/43**

(45) Bekanntmachung des Hinweises auf die
Patenterteilung :
**01.07.92 Patentblatt 92/27**

(84) Benannte Vertragsstaaten :
**AT BE CH DE FR GB GR IT LI LU NL SE**

(56) Entgegenhaltungen :
**EP-A- 0 297 331**

(56) Entgegenhaltungen :
**CH-A- 498 758**
**DE-B- 1 197 388**
**DE-B- 1 248 558**
**DE-B- 1 249 301**

(73) Patentinhaber : **Gärtner, Franz**
**Mühlweg 10**
**W-8741 Unterelsbach (DE)**

(72) Erfinder : **Gärtner, Franz**
**Mühlweg 10**
**W-8741 Unterelsbach (DE)**

(74) Vertreter : **Patentanwälte Dr. Solf & Zapf**
**Zeppelinstrasse 53**
**W-8000 München 80 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 338 500 B1

## Beschreibung

Die Erfindung bezieht sich auf eine Handhängebahn für die innerbetriebliche Hängeförderung in der Bekleidungsindustrie gemäß dem Oberbegriff des Patentanspruchs 1.

Eine Handhängebahn dieser Art ergibt sich beispielsweise auch aus einem Prospekt "HELM/Gruppe 14" der Firma Hespe & Woelm GmbH & Co. KG, Hasselbecker Straße 4, 5628 Heiligenhaus. Hierbei sind die Laufrollen koaxial an einem längs des kastenförmigen Laufschienenprofils bewegbaren Achslager angebracht. Die zur Laufschiene parallele Führung der beiden Laufräder erfolgt durch jeweils seitlich neben der Lauffläche für die beiden Laufräder vorgesehene, nach oben gerichtete Schrägen im Kastenprofil.

Eine Hängebahn gemäß dem Oberbegriff des Anspruch 1 ist aus dem Dokument CH-A- 498 758 bekannt, und eine Hängebahn gemäß dem Oberbegriff des Anspruchs 14 ist aus dem dokument DE-B-1 248 558 bekannt.

Die beiden Laufräder weisen einen relativ großen Durchmesser auf und nehmen nahezu die gesamte lichte Höhe des Laufschienenprofils ein. Hierdurch ist zwar gewährleistet, daß die beiden Rollen zwischen den beiden nach oben gerichteten Schrägen relativ sicher in Schienenlängsrichtung geführt sind. Nachteilig ist jedoch, daß sowohl die Laufrollen, als auch die Laufschienen durch ständige Reibung einem erheblichen Verschleiß unterworfen sind, und daß ein an derartig gelagerten und geführten Rollen befestigter Wagen sich wegen der Reibung, insbesondere im Bereich von Laufschienenkurven, nur mit erhöhtem Kraftaufwand bewegen läßt. Ferner ist nachteilig, daß sich beim Gegenstand des oben genannten "HELM"-Prospektes das Tragelement aus Achslager und Laufrädern nur am Anfang bzw. am Ende oder an einer bestimmten Stelle derselben entfernen läßt. Schließlich ist noch nachteilig, daß es bei einer Handhängebahn in dieser Ausführungsform vorkommen kann, daß - wenn die Laufflächen für die Lagerrollen zum leichteren Bewegen derselben geschmiert werden - Schmiermittel oder mit Schmiermittel verunreinigter Staub aus der zwischen den beiden Laufflächen gebildeten Schlitzöffnung auf darunter befindliche Kleidungsstücke herabfallen und diese verunreinigen können.

Es ist Aufgabe der Erfindung, eine Handhängebahn der eingangs genannten Art zu schaffen, bei der sowohl die Laufschiene als auch die in ihrer Längsrichtung bewegbare Laufrollenanordnung so beschaffen sind, daß ein aus Achslager und Laufrollen gebildetes Tragelement einfach, sicher und sich längsmittig in der Laufschiene selbst zentrierend auf deren Laufflächen lagerbar, an beliebiger Stelle aus der Laufschiene entfernbar bzw. in diese einsetzbar sind.

Diese Aufgabe wird erfindungsgemäß gelöst durch die Gegenstände des Anspruchs 1 und/oder des Anspruchs 14. Erfinderische Weiterbildungen und vorteilhafte Ausgestaltungen ergeben sich aus den Unteransprüchen 2 bis 13 und/oder 15 bis 25.

Durch die Schrägstellung der Drehachsen der beiden Laufrollen der erfindungsgemäßen Handhängebahn werden im Vergleich zur bekannten Handhängebahn folgende Vorteile erreicht:

Eine Reibungskräfte und damit Reibungsverschleiß verursachende Längsführung der Laufrollen tritt bei dem Anmeldungsgegenstand nicht auf, da die Längsführung der gesamten Einheit aus Achslager und Laufrollen unter Ausnutzung der Schwerkraft allein durch die selbstzentrierend wirkende, automatisch längsmittige Ausrichtung derselben erfolgt. Beide Rollen haben - jeweils in entgegengesetzter Richtung - die Neigung, auf ihrer jeweils nach außen und schräg nach unten verlaufenden Lauffläche schräg nach unten rollen zu wollen. Dies ist natürlich deswegen nicht möglich, weil beide Laufrollen durch das zwischen ihnen angeordnete Achslager miteinander verbunden sind, das sie in der Laufschiene längsmittig im Gleichgewicht hält.

Ein weiterer Vorteil besteht darin, daß das aus Achslager und den beiden an diesem befestigten Laufrollen gebildete Tragelement als Ganzes an jeder beliebigen Stelle der Laufschiene entfernt werden kann, wozu es nur ein wenig angehoben, um etwa 90° um die vertikal verlaufende Achse der Tragstange gedreht und anschließend nach unten herausgenommen zu werden braucht.

Schließlich besteht ein weiterer Vorteil bei der in der Laufflächenanordnung mit den in den Ansprüchen 1 bis 15 gekennzeichneten Merkmalen darin, daß ein die Laufflächen schmierendes Schmiermittel bzw. damit verunreinigter Staub nicht durch die dazwischen angeordnete Schlitzöffnung auf darunter befindliche Kleidungsstücke od. dgl. fällt, sondern in hiervon entgegengesetzter Richtung jeweils in die zwischen der Lauffläche und Profilseitenwand gebildete Rinne bzw. Vertiefung fallen kann. Diese jeweils seitlich der Schlitzöffnung gebildeten, jeweils mit Abstand unterhalb der Ebene der Schlitzöffnung liegenden Vertiefungen der Laufschiene dienen sozusagen als Schmutzauffangbehälter. Hieraus kann der dort angesammelte Schmutz nicht mehr auf unter der Schlitzöffnung befindliche Bekleidungsstücke herunterfallen.

Auf diese Weise kann auch ein mit Kleidungsstücken vollbehangener Wagen mit einfachen Handgriffen aus der Laufschiene entfernt oder in diese eingehängt werden.

Weitere Merkmale, Einzelheiten, Vorteile und Anwendungsmöglichkeiten ergeben sich aus nachfolgender Beschreibung bevorzugter Ausführungsformen der Erfindung, wie sie aus der Zeichnung erkennbar ist. Es zeigen:

Fig.1 eine perspektivische Darstellung einer ersten Ausführungsform einer Handhängebahn gemäß der Erfindung und

Fig.2 eine perspektivische Darstellung einer zweiten Ausführungsform einer Handhängebahn gemäß der Erfindung.

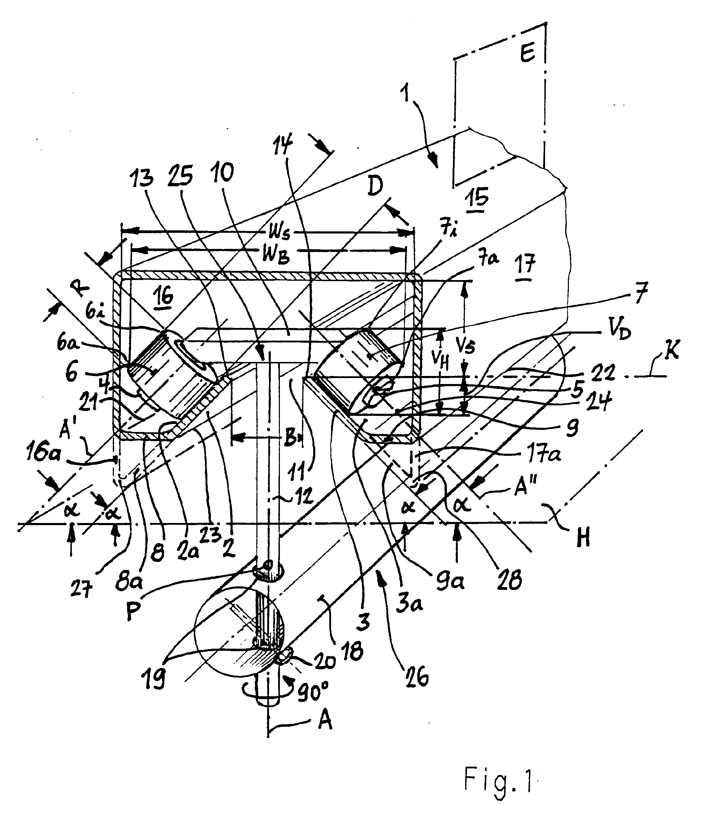

Gemäß Fig. 1 umfaßt die erste Ausführungsform der erfindungsgemäßen Handhängebahn einen Abschnitt eines kastenförmigen Laufschienenprofils 1, das im wesentlichen eine Profildeckenwandung 15, zwei seitlich derselben angeordnete, nach unten rechtwinkelig abgewinkelte Profilseitenwandungen 16 und 17 sowie zwei zur längsmittig angeordneten vertikalen Längsmittelebene E hin rechtwinkelig einwärts abgewinkelte, aufeinander zulaufende, in den Biegelinien 21 und 22 abgewinkelte Profilbodenwandungen 8,9 aufweist. Die freien Endbereiche 2,3 der Profilbodenwandungen 8 bzw. 9 bilden jeweils eine Lauffläche 2a bzw. 3a für Laufrollen 6 bzw. 7 und sind jeweils längs einer Biegelinie 23 bzw. 24 um einen Winkel α zur Horizontalebene H der Profilbodenwandungen 8 bzw. 9 zur vertikalen Längsmittelebene E hin schräg nach oben abgewinkelt.

Die beiden Endkanten 13, 14 der beiden Endbereiche 2,3 bilden zwischen sich eine längsmittig verlaufende Schlitzöffnung 11, die eine Breite B aufweist.

In Abweichung von der vorstehend beschriebenen Form des erfindungsgemäßen Laufschienenprofils kann dieses folgende weitere Form aufweisen:

Wie in Fig. 1 gestrichelt dargestellt ist, kann das Laufschienenprofil 1 in vertikaler Richtung mit nach unten hin längeren Profilseitenwandungen 16a,17a versehen sein, an die sich jeweils um den Winkel α längs der Biegelinien 27,28 zur Längsmittelebene E hin einwärts gebogene Profilbodenwandungen 8a,9a anschließen. Diese weisen wiederum Endbereiche 2,3 auf, die die Laufflächen 2a,3a für die Laufrollen 6,7 bilden. Diese Profilform ist zwar leichter herzustellen, weil an jeder Profilseite die Biegung einer Profilkante entfällt. Sie verursacht aber einen höheren Materialverbrauch, wie sich aus dem Vergleich der beiden beschriebenen und in der Zeichnung dargestellten Laufschienenprofilen ergibt.

Im Inneren des im wesentlichen kastenförmig ausgebildeten Profils der Laufschiene 1 ist ein längs derselben bewegbares Tragelement 25 zur Aufnahme von Fördergut gelagert. Das Tragelement 25 weist eine als Achslager dienende, sich in Gebrauchslage quer zur Längserstreckung des Laufschienenprofils 1 erstreckende Traverse 10 auf. An ihren beiden Enden ist die Traverse 10 jeweils mit einer Drehwelle 4 bzw. 5, vorzugsweise einem Kugellager, zur Aufnahme je einer Laufrolle 6 bzw.7 versehen. Die Achsen A′,A″ der Drehwellen 4,5 sind von der Traverse 10 nach unten geneigt angeordnet, und zwar um den gleichen Winkel α, wie die Abwinkelung der die Lauffläche 2a,3a tragenden Endbereiche 2,3. Die Achsen A′,A″ verlaufen somit jeweils zur entsprechenden Lauffläche 2a,3a parallel. Auf diese Weise ist gewährleistet, daß die Laufrollen 6,7 mit ihrer vollen Rollenbreite R auf der Lauffläche 2,3 aufsitzen und in deren Längsrichtung abrollen können. Wie sich aus der Zeichnung ergibt, sind hierbei weder auf der einen noch auf der anderen Seite der Laufrollen 6,7 irgendwelche zusätzliche Längsführungseinrichtungen vorgesehen. Die längsmittige Ausrichtung der Laufrollen 6,7 ergibt sich durch die zentrierende Wirkung des erfindungsgemäß ausgebildeten Laufschienen-/Laufrollen-Systems von selbst, wie nachfolgend ausgeführt wird.

Nach der Erfindung und wie aus der Zeichnung erkennbar ist, ist der lichte Abstand $V_S$ zwischen den beiden freien Kanten 13, 14 der beiden Endbereiche 2,3 und der Profildeckenwandung 15 zumindest so groß mit geringem Spiel bemessen, wie der größte Abstand $V_H$ zwischen der Oberkante der Traverse 10 oder dem höchsten Punkt der Innenkante 6i,7i der Laufrollen 6,7 und dem tiefsten Punkt der Außenkante 6a,7a der Laufrollen 6,7.

Zudem ist die lichte Breite B der Schlitzöffnung 11 zumindest so groß mit geringem Spiel bemessen, wie der Durchmesser D der beiden Laufrollen 6,7 beträgt.

In Kombination damit ist die lichte Weite $W_S$ des Laufschienenprofils 1 zumindest so groß mit geringem Spiel bemessen, wie die über die beiden Laufrollen 6,7 gemessene größte Breite $W_B$ beträgt.

Wie aus der in der Zeichnung dargestellten bevorzugten Ausführungsform der Erfindung erkennbar ist, ist an der Traverse 10 eine die Schlitzöffnung 11 längsmittig vertikal nach unten durchsetzende Tragstange 12 fest angebracht. Ein aus einer Traverse 10, zwei Laufrollen 6,7 und einer Tragstange 12 gebildetes Tragelement 25 bildet zusammen mit zumindest einem (hier nicht dargestellten) weiteren gleichartig ausgebildeten Tragelement 25 sowie einem zwischen den Tragelementen 25 angeordneten Längstragholm 18 eine Fördergutaufnahmeeinrichtung bzw. einen sogenannten Trolley bzw. Tragwagen 26.

Die beiden Enden des Längstragholms 18 sind zur Bildung eines Trolleys bzw. Tragwagens 26 an den zumindest zwei ihn tragenden Tragstangen 12 jeweils gelenkig angebracht, damit jedes Tragelement 25 an jeder beliebigen Stelle aus dem Laufschienenprofil 1 herausgenommen oder in dieses eingehängt werden kann, und zwar unabhängig von der aktuellen Stellung des Tragwagens 26, wie nachfolgend noch beschrieben werden wird. Die gelenkige Anordnung des Längstragholms 18 des Tragwagens 26 ermöglicht dessen problemloses Durchfahren von Laufschienenkurven.

In der hier gezeigten bevorzugten Ausführungsform der Erfindung ist der Längstragholm 18 rohrförmig ausgebildet und weist an seinen beiden Enden eine ihn quer zu seiner Längsachse und mittig durchsetzende, im Querschnitt kreisförmige Bohrung 19 auf. Die Bohrung 19 ist in Gebrauchslage von der Tragstange 12 durchsetzt. Die Tragstange 12 ist ihrerseits mit einer (hier nicht dargestellten) Bohrung versehen, die in Gebrauchslage von einem Sicherungsorgan 20 durchsetzt ist. Das Sicherungsorgan 20 sichert den Längstragholm 18 an der Tragstange 12 und kann aus einer Schraube, einem Splint oder dgl. bestehen.

Durch die erfindungsgemäße Anordnung der Laufflächen 2a,3a für die Laufrollen 6,7 zentriert sich jedes Tragelement 25 in bezug auf die Längsmittelebene E der Laufschiene 1 infolge des tief unterhalb der Laufflächen 2a,3a liegenden Gesamtschwerpunktes P des Tragelements 25 ohne zusätzliche Längsführungseinrichtungen permanent von selbst. Dabei behält die Tragstange 12 in der Schlitzöffnung 11 der Laufschiene 1 stets ihre längsmittige Position bei. Die Gefahr eines "Entgleisens" der Laufrollen 6,7 eines Tragelements 25 aus der Laufschiene 1 ist vollkommen ausgeschlossen.

Ein (aus Traverse 10, Laufrollen 6,7 und Tragstange 12 gebildetes) Tragelement 25 der Handhängebahn gemäß der Erfindung kann - wie nachfolgend beschrieben wird - an jeder beliebigen Stelle der Laufschiene 1 aus dieser herausgenommen bzw. in diese eingehängt werden:

Zur Herausnahme eines Tragelements 25 aus der Laufschiene 1 wird die Tragstange 12 des Tragelements 25 aus ihrer Gebrauchslage zunächst um mindestens die Höhe $V_D$ angehoben, und zwar so weit, daß die tiefsten Punkte der Außenkanten 6a,7a der Laufrollen 6,7 geringfügig oberhalb der die beiden freien Längskanten 13,14 enthaltenden Horizontalebene K liegen. Anschließend wird die Tragstange 12 um ihre Achse A um etwa 90° gedreht, wobei die Laufrollen 6,7 über die Schlitzöffnung 11 verschwenkt werden. Schließlich wird die Tragstange 12 nach unten abgesenkt, wobei die Traverse 10 und die an dieser angebrachten Laufrollen 6,7 mit geringem Spiel durch die Schlitzöffnung 11 der Laufschiene 1 hindurch nach unten herausführbar sind. Währenddessen kann der Längstragholm 18 mit der Tragstange 12 des Tragelements 25 wegen seiner gelenkigen Verbindung mit dieser verbunden bleiben.

Die Einführung eines Tragelements 25 in das Laufschienenprofil 1 erfolgt in umgekehrter Reihenfolge: Zunächst wird die Tragstange 12 des an der Laufschiene 1 einzuhängenden Tragelements 25 von unten an die Laufschiene 1 herangeführt, wobei die Traverse 10 so positioniert ist, daß die Achsen A',A'' der Laufrollen 6,7 in der Längsmittelebene E liegen. Nach vollkommener Einführung des Tragelements 25 durch die Schlitzöffnung 11 vertikal nach oben wird schließlich die Tragstange 12 um ihre Achse A um 90° gedreht und um den Betrag $V_D$ so weit abgesenkt, bis die die Laufrollen 6,7 auf ihren jeweiligen Laufflächen 2a,3a aufsitzen. Auch beim Einsetzen eines Tragelements 25 braucht dieses nicht von einem bereits mit Fördergut, beispielsweise mit Kleidungsstücken, versehenen Längstragholm 18 getrennt zu werden, da letzterer - wie vorstehend beschrieben - mit der Tragstange 12 gelenkig verbunden ist.

Das Tragelement 25 der erfindungsgemäßen Handhängebahn kann bei beiden vorstehend erwähnten, unterschiedlich ausgebildeten Formen des Laufschienenprofils 1 eingesetzt werden (das heißt, sowohl bei einem Laufschienenprofil mit den Wandungen 15,16, 17,8,9 als auch bei einem Laufschienenprofil mit den Wandungen 15,16a,17a,8a,9a).

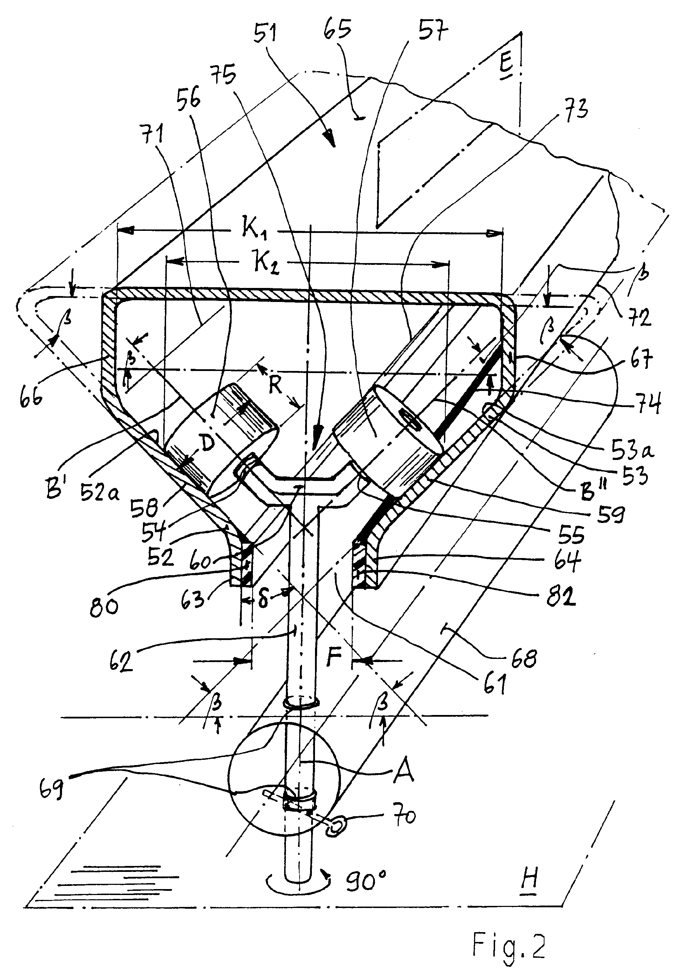

Gemäß Fig. 2 umfaßt die zweite Ausführungsform der erfindungsgemäßen Handhängebahn einen Abschnitt eines kastenförmigen Laufschienenprofils 51, das im wesentlichen eine Profildeckenwandung 65, zwei an deren Seitenrändern angebundene, nach unten rechtwinkelig abgewinkelte Profilseitenwandungen 66 und 67 sowie zwei an deren unteren Rändern angebundene Profilbodenwandungen 58,59. Die Profilbodenwandungen 58,59 sind zur längsmittig angeordneten vertikalen Längsmittelebene E hin um einen Winkel β zur Horizontalebene H in Biegelinien 71 und 72 einwärts und nach unten abgewinkelt, wobei sie in ihren Endbereichen 52,53 aufeinanderzu laufen. Die Profilbodenwandungen 58,59 können in einer weiteren Ausführungsform der Erfindung auch unmittelbar an der Profildeckenwandung 65 angebunden sein, wie dies in Fig. 2 gestrichelt dargestellt ist, wobei die Profilbodenwandungen 58,59 zur Profildeckenwandung 65 jeweils einen Winkel β bilden. Nahe der freien Endbereiche 52,53 der Profilbodenwandungen 58 bzw. 59 weisen letztere an ihrer dem Kastenprofilinnenraum zugewandten Seite jeweils eine um einen Winkel β zur Horizontalebene H hin einwärts und schräg nach unten abgewinkelte Lauffläche 52a bzw. 53a für Laufrollen 56 bzw. 57 auf.

Die beiden Endkanten 63, 64 der beiden Endbereiche 52,53 bilden zwischen sich eine längsmittig verlaufende Schlitzöffnung 61, die eine lichte Breite F aufweist.

An den beiden Endbereichen 52,53 können gemäß der Erfindung Zentrierleisten 80,82 angeordnet sein, welche die Schlitzöffnung 61 begrenzen und einen gegenseitigen Abstand F aufweisen.

Im Inneren des im wesentlichen kastenförmig ausgebildeten Profils der Laufschiene 51 ist ein längs derselben bewegbares Tragelement 75 zur Aufnahme von Fördergut gelagert. Das Tragelement 75 weist eine als Achslager dienende, sich quer zur Längserstreckung des Laufschienenprofils 51 erstreckende Traverse 60 auf. An ihren beiden Enden ist die Traverse 60 jeweils mit einer Drehwelle 54 bzw. 55, vorzugsweise einem Kugellager, zur Aufnahme je einer Laufrolle 56 bzw. 57 versehen. Die Achsen B',B'' der Drehwellen 54,55 sind von der Traverse 60 nach oben geneigt angeordnet, und zwar um den gleichen Winkel $\beta$ geneigt, wie die Abwinkelung der die Lauffläche 52a,53a tragenden Endbereiche 52,53. Die Achsen B′,B″ verlaufen somit jeweils zur entsprechenden Lauffläche 52a,53a parallel. Auf diese Weise ist gewährleistet, daß die Laufrollen 56,57 mit ihrer vollen Rollenbreite R auf der Lauffläche 52,53 aufsitzen und in deren Längsrichtung abrollen können.

Wie sich aus Fig. 2 ergibt, sind hierbei weder auf der einen noch auf der anderen Seite der Laufrollen 56,57 irgendwelche zusätzliche Längsführungseinrichtungen vorgesehen. Die längsmittige Ausrichtung der Laufrollen 56,57 ergibt sich durch die zentrierende Wirkung des erfindungsgemäß ausgebildeten Laufschienen-/Laufrollen-Systems von selbst, wie nachfolgend ausgeführt wird.

Die lichte Breite F der Schlitzöffnung 61 ist zumindest so groß mit geringem Spiel bemessen, wie der Durchmesser D der beiden Laufrollen 56,57.

In Kombination damit ist die lichte Weite $K_1$ des Laufschienenprofils 51 zumindest so groß mit geringem Spiel bemessen, wie die über die beiden Laufrollen 56,57 gemessene größte Breite $K_2$ beträgt.

Wie aus Fig. 2 erkennbar ist, ist an der Traverse 60 eine die Schlitzöffnung 61 längsmittig vertikal nach unten durchsetzende Tragstange 62 fest angebracht. Ein aus einer Traverse 60, zwei Laufrollen 56,57 und einer Tragstange 62 gebildetes Tragelement 75 bildet zusammen mit zumindest einem (hier nicht dargestellten) weiteren gleichartig ausgebildeten Tragelement 75 sowie einem zwischen den Tragelementen 75 angeordneten Längstragholm 68 eine Fördergutaufnahmeeinrichtung bzw. einen sogenannten Trolley bzw. Tragwagen.

Die beiden Enden des Längstragholms 68 sind zur Bildung eines Trolleys bzw. Tragwagens an den zumindest zwei ihn tragenden Tragstangen 62 jeweils gelenkig angebracht, damit jedes Tragelement 75 an jeder beliebigen Stelle aus dem Laufschienenprofil 51 herausgenommen oder in dieses eingehängt werden kann, und zwar unabhängig von der aktuellen Stellung des Tragwagens, wie nachfolgend noch beschrieben werden wird. Die gelenkige Anordnung des Längstragholms 68 des Tragwagens ermöglicht dessen problemloses Durchfahren von Laufschienenkurven.

In der hier gezeigten bevorzugten Ausführungsform der Erfindung ist der Längstragholm 68 rohrförmig ausgebildet und weist an seinen beiden Enden eine ihn quer zu seiner Längsachse und mittig durchsetzende, im Querschnitt kreisförmige Bohrung 69 auf. Die Bohrung 69 ist in Gebrauchslage von der Tragstange 62 durchsetzt. Die Tragstange 62 ist ihrerseits mit einer (hier nicht dargestellten) Bohrung versehen, die in Gebrauchslage von einem Sicherungsorgan 70 durchsetzt ist. Das Sicherungsorgan 70 sichert den Längstragholm 68 an der Tragstange 62 und kann aus einer Schraube, einem Splint oder dgl. bestehen.

Durch die erfindungsgemäße Anordnung der Laufflächen 52a,53a für die Laufrollen 56,57 zentriert sich jedes Tragelement 75 in bezug auf die Längsmittelebene E der Laufschiene 51 infolge des tief unterhalb der Laufflächen 52a,53a liegenden Gesamtschwerpunktes P des Tragelements 75 ohne zusätzliche Längsführungseinrichtungen permanent von selbst. Dabei behält die Tragstange 62 in der Schlitzöffnung 61 der Laufschiene 51 stets ihre längsmittige Position bei. Die Gefahr eines "Entgleisens" der Laufrollen 56,57 eines Tragelements 75 aus der Laufschiene 51 ist vollkommen ausgeschlossen.

Ein (aus Traverse 60, Laufrollen 56,57 und Tragstange 62 gebildetes) Tragelement 75 der Handhängebahn gemäß der Erfindung kann - wie nachfolgend beschrieben wird - an jeder beliebigen Stelle der Laufschiene 51 aus dieser herausgenommen bzw. in diese eingehängt werden:

Zur Herausnahme eines Tragelements 75 aus der Laufschiene 51 wird die Tragstange 62 des Tragelements 75 um ihre Achse A um etwa 90° gedreht, wobei die Laufrollen 56,57 über die Schlitzöffnung 61 verschwenkt werden. Schließlich wird die Tragstange 62 nach unten abgesenkt, wobei die Traverse 60 und die an dieser angebrachten Laufrollen 56,57 mit geringem Spiel durch die Schlitzöffnung 61 der Laufschiene 51 hindurch nach unten herausführbar sind. Währenddessen kann der Längstragholm 68 mit der Tragstange 62 des Tragelements 75 wegen seiner gelenkigen Verbindung mit dieser verbunden bleiben.

Die Einführung eines Tragelements 75 in das Laufschienenprofil 51 erfolgt in umgekehrter Reihenfolge: Zunächst wird die Tragstange 62 des an der Laufschiene 51 einzuhängenden Tragelements 75 von unten an die Laufschiene 51 herangeführt, wobei die Traverse 60 so positioniert ist, daß die Achsen B′,B″ der Laufrollen 56,57 in der Längsmittelebene E liegen. Nach vollkommener Einführung des Tragelements 75 durch die Schlitzöffnung 61 vertikal nach oben wird schließlich die Tragstange 62 um ihre Achse A um 90° gedreht und nach unten abgesenkt, bis die Laufrollen 56,57 auf ihren jeweiligen Laufflächen 52a,53a aufsitzen. Auch beim Einsetzen eines Tragelements 75 braucht dieses nicht von einem bereits mit Fördergut, beispielsweise mit Kleidungsstücken, versehenen Längstragholm 68 getrennt zu werden, da dieser - wie vorstehend beschrieben - mit der Tragstange 62 gelenkig verbunden ist.

**Patentansprüche**

1. Handhängebahn für die innerbetriebliche Hängeförderung in der Bekleidungsindustrie, mit

– einem im wesentlichen kastenförmigen Laufschienenprofil (1) mit einer Profildeckenwandung (15), zwei Profilseitenwandungen (16,17) sowie zwei an diese anschließenden unten angeordneten, zur vertikalen Längsmittelebene (E) hin abgewinkelten Profilbodenwandungen (8,9), die zwischen sich eine längsmittig verlaufende Schlitzöffnung (11) bilden,

– und einem innerhalb des Laufschienenprofils (1) angeordneten Achsträger (10),mit einem Paar von an diesem drehbar gelagerten zylindrischen Laufrollen (6,7) und einer an diesem angebrachten, die Schlitzöffnung des Laufschienenprofils nach unten durchsetzenden Tragstange (12) für einen Tragwagen zur Aufnahme von Fördergut,

– wobei die freien Endbereiche (2,3) der beiden beiderseits der Schlitzöffnung (11) des Laufschienenprofils (1) angeordneten, jeweils zur vertikalen Längsmittelebene (E) des Laufschienenprofils (1) hin gerichteten, spiegelbildlich ausgebildeten Bodenwandungen (8,9) Laufflächen (2a, 3a) für jeweils eine der beiden Laufrollen (6,7) bilden,

– wobei zumindest die Laufflächen (2a,3a) für die Laufrollen (6,7) bildenden Bereiche der Profilbodenwandungen (8,9) jeweils in einem Winkel ($\alpha$) zur Horizontalebene (H) der Profilbodenwandungen (8,9) aufeinanderzu verlaufend schräg nach oben und einwärts abgewinkelt sind,

– und wobei der Achsträger (10) eine sich quer zur Verlaufsrichtung der Laufschiene (1) erstreckende Traverse mit an deren Enden angeordneten Lagerzapfen (4,5) zur Aufnahme je einer Laufrolle (6,7) ist, deren Achsen (A', A″) jeweils spiegelbildlich zur vertikalen Längsmittelebene (E) des Laufschienenprofils (1) nach unten und nach außen in einem Winkel ($\alpha$) zur Horizontalebene (H) und zu den beiden Laufflächen (2a, 3a) jeweils paarweise parallel verlaufend abgewinkelt sind, so daß die Laufrollen entlang ihrer vollen Rollenbreite (R) auf den Laufflächen abrollen,

dadurch **gekennzeichnet**, daß der lichte Abstand zwischen den die Schlitzöffnung (11) begrenzenden freien Kanten (13,14) der Endbereiche (2,3) der beiden Profilbodenwandungen (8,9) und der Profildeckenwandung (15) zumindest so groß mit geringem Spiel bemessen ist, wie der größte Abstand ($V_H$) zwischen der Oberkante der Traverse (10) oder dem höchsten Punkt der Innenkante (6i, 7i) der Laufrollen (6,7) und dem tiefsten Punkt der Außenkante (6a,7a) der Laufrollen (6,7), und die lichte Breite (B) der Schlitzöffnung (11) des Laufschienenprofils (1) zumindest so groß mit geringem Spiel bemessen ist, wie der Durchmesser (D) der beiden Laufrollen (6,7).

2. Handhängebahn nach Anspruch 1, dadurch **gekennzeichnet**, daß die lichte Weite ($W_S$) des Laufschienenprofils (1) zumindest so groß mit geringem Spiel bemessen ist, wie die über die beiden Laufrollen (6,7) gemessene größte Breite ($W_B$) beträgt.

3. Handhängebahn nach Anspruch 1 oder 2, dadurch **gekennzeichnet**, daß die Tragstange (12) an der Traverse (10) längsmittig angebracht ist und infolge Selbstzentrierung der beiden an der Traverse (10) gelagerten Laufrollen (6,7) auf ihren Laufflächen (2,3) die Schlitzöffnung (11) der Laufschiene (1) längsmittig durchsetzt.

4. Handhängebahn nach einem oder mehreren der Ansprüche 1 bis 3, dadurch **gekennzeichnet**, daß ein von der Traverse (10), von der an letzterer drehfest angebrachten Tragstange (12) und von den an der Traverse (10) gelagerten beiden Laufrollen (6,7) gebildetes Tragelement (25) an jeder beliebigen Stelle der Laufschiene (1) durch Anheben, durch Drehen um die Achse (A) der Tragstange (12) um 90° und durch Absenken durch die Schlitzöffnung (11) hindurch nach unten aus der Laufschiene (1) herausnehmbar ist.

5. Handhängebahn nach einem oder mehreren der Ansprüche 1 bis 4, dadurch **gekennzeichnet**, daß am unteren Ende der Tragstange (12) ein Längstragholm (18) gelenkig angebracht ist.

6. Handhängebahn nach Anspruch 5, dadurch **gekennzeichnet**, daß der Längstragholm (18) am unteren Ende der Tragstange (12) um deren Achse (A) herum zumindest um 90° schwenkbar angebracht ist.

7. Handhängebahn nach Anspruch 6, dadurch **gekennzeichnet**, daß das untere Ende der Tragstange (12) eine am Längstragholm (18) ausgebildete Bohrung (19) durchsetzt und zur Sicherung der Gebrauchslage des Längstragholms (18) mit einem unterhalb desselben angeordneten lösbaren Sicherungselement (20) versehen ist.

8. Handhängebahn nach Anspruch 7, dadurch **gekennzeichnet**, daß die Tragstange (12) sowie die am Längstragholm (18) vorgesehene Bohrung (19) im Querschnitt kreisförmig ausgebildet sind.

9. Handhängebahn nach Anspruch 7 oder 8, dadurch **gekennzeichnet**, daß das Sicherungselement (20) eine Schraube, ein Splint oder dergleichen ist.

10. Handhängebahn nach einem oder mehreren der Ansprüche 1 bis 9, dadurch **gekennzeichnet**, daß die an den beiden Profilseitenwandungen (16,17) vorgesehenen, längs der Biegelinien (21,22) rechtwinkelig einwärts gebogenen, jeweils zur Horizontalebene (H) parallel verlaufenden Profilbodenwandungen (8,9) Endbereiche (2,3) aufweisen, die spiegelbildlich zur Horizontalebene (H) längs der Biegelinien (23,24) um den Winkel ($\alpha$) gebogen sind und Laufflächen (2a, 3a) bilden.

11. Handhängebahn nach einem oder mehreren der Ansprüche 1 bis 10, dadurch **gekennzeichnet**, daß

**6**

EP 0 338 500 B1

die an den beiden Profilseitenwandungen (16a,17a) vorgesehenen Profilbodenwandungen (8a,9a) jeweils längs der Biegelinien (27,28) und spiegelbildlich zur Horizontalebene (H) mit einem Winkel (α) einwärts gebogen sind und Endbereiche (2,3) mit Laufflächen (2a,3a) für die Laufrollen (6,7) bilden.

12. Handhängebahn nach einem der Ansprüche 1 bis 11, dadurch **gekennzeichnet**, daß der Winkel (α) größer als 15° und kleiner als 75° ist.

13. Handhängebahn nach Anspruch 12, dadurch **gekennzeichnet**, daß der Winkel (α) 45° beträgt.

14. Handhängebahn für die innerbetriebliche Hängeförderung in der Bekleidungsindustrie, mit
– einem im wesentlichen kastenförmigen Laufschienenprofil (1) mit einer Profildeckenwandung (15), zwei Profilseitenwandungen(16,17) sowie zwei an diese anschließenden unten angeordneten, zur vertikalen Längsmittelebene (E) hin abgewinkelten Profilbodenwandungen (8,9), die zwischen sich eine längsmittig verlaufende Schlitzöffnung (11) bilden,
– mit einem innerhalb des Laufschienenprofils (1) angeordneten Achsträger (60) mit einem Paar von an diesem drehbar gelagerten zylindrischen Laufrollen (6,7) und einer an diesem angebrachten, die Schlitzöffnung (11) des Laufschienenprofils (1) nach unten durchsetzenden Tragstange (12) für einen Tragwagen zur Aufnahme von Fördergut,
– wobei die freien Endbereiche (52,53) der beiden beiderseits der Schlitzöffnung (61) des Laufschienenprofils (51) angeordneten, jeweils zur vertikalen Längsmittelebene (E) des Laufschienenprofils (51) hin gerichteten, spiegelbildlich ausgebildeten Bodenwandungen (58,59) Laufflächen (52a,53a) für jeweils eine der beiden Laufrollen (56,57) bilden,
– wobei zumindest die Laufflächen (52a,53a) für die Laufrollen (56,57) bildenden Bereiche der Profilbodenwandungen (58,59) jeweils zur Horizontalebene (H) der Profilbodenwandungen (58,59) aufeinanderzu verlaufend schräg abgewinkelt sind,
– und wobei der Achsträger (60) eine sich quer zur Verlaufsrichtung der Laufschiene (51) erstreckende Traverse mit an deren Enden angeordneten Lagerzapfen (54,55) zur Aufnahme je einer Laufrolle (56,57) ist, deren Achsen (B′,B″) jeweils spiegelbildlich zur vertikalen Längsmittelebene (E) des Laufschienenprofils (51) verlaufen und schräg zur Horizontalebene (H) geneigt und zu den beiden Laufflächen (52a,53a) jeweils paarweise parallel verlaufend abgewinkelt sind, so daß die Laufrollen entlang ihrer vollen Rollenbreite (R) auf den Laufflächen abrollen,
dadurch **gekennzeichnet**, daß die Laufflächen (52a,53a) schräg nach unten abgewinkelt sind, daß die Achsen (B′,B″) der Laufrollen (56,57) schräg nach oben abgewinkelt sind und die lichte Breite (F) der Schlitzöffnung (61) des Laufschienenprofils (51) zumindest so groß mit geringem Spiel bemessen ist, wie der Durchmesser (G) der beiden Laufrollen (56,57).

15. Handhängebahn nach Anspruch 16, dadurch **gekennzeichnet**, daß die lichte Weite ($K_1$) des Laufschienenprofils (51) zumindest so groß mit geringem Spiel bemessen ist, wie die über die beiden Laufrollen (56,57) gemessene größte Breite ($K_2$) beträgt.

16. Handhängebahn nach Anspruch 14 oder 15, dadurch **gekennzeichnet**, daß die Tragstange (62) an der Traverse (60) längsmittig angebracht ist und infolge Selbstzentrierung der beiden an der Traverse (60) gelagerten Laufrollen (56,57) auf ihren Laufflächen (52a,53a) die Schlitzöffnung (61) der Laufschiene (51) längsmittig durchsetzt.

17. Handhängebahn nach einem oder mehreren der Ansprüche 14 bis 16, dadurch **gekennzeichnet**, daß ein von der Traverse (60), von der an letzterer drehfest angebrachten Tragstange (62) und von den an der Traverse (60) gelagerten beiden Laufrollen (56,57) gebildetes Tragelement (25) an jeder beliebigen Stelle der Laufschiene (51) durch Anheben, durch Drehen um die Achse (A) der Tragstange (62) um 90° und durch Absenken durch die Schlitzöffnung (61) hindurch nach unten aus der Laufschiene (61) herausnehmbar ist.

18. Handhängebahn nach einem oder mehreren der Ansprüche 14 bis 17, dadurch **gekennzeichnet**, daß am unteren Ende der Tragstange (62) ein Längstragholm (68) gelenkig angebracht ist.

19. Handhängebahn nach einem oder mehreren der Ansprüche 14 bis 18, dadurch **gekennzeichnet**, daß der Längstragholm (68) am unteren Ende der Tragstange (62) um deren Achse (A) herum zumindest um 90° schwenkbar angebracht ist.

20. Handhängebahn nach Anspruch 19, dadurch **gekennzeichnet**, daß das untere Ende der Tragstange (62) eine am Längstragholm (68) ausgebildete Bohrung (69) durchsetzt und zur Sicherung der Gebrauchslage des Längstragholms (68) mit einem unterhalb desselben angeordneten lösbaren Sicherungselement (70) versehen ist.

21. Handhängebahn nach Anspruch 20, dadurch **gekennzeichnet**, daß die Tragstange (62) sowie die am Längstragholm (68) vorgesehene Bohrung (69) im querschnitt kreisförmig ausgebildet sind.

22. Handhängebahn nach Anspruch 21, dadurch **gekennzeichnet**, daß das Sicherungselement (70) eine Schraube, ein Splint oder dgl. ist.

23. Handhängebahn nach Anspruch 21 oder 22, dadurch **gekennzeichnet**, daß die an den beiden Profil-

7

seitenwandungen (66,67) vorgesehenen, längs der Biegelinien (71,72) rechtwinkelig einwärts gebogenen, jeweils zur Horizontalebene H im Winkel (β) geneigt verlaufenden Profilbodenwandungen (58,59) Laufflächen (52a,53a) bilden und Endbereiche (52,53) aufweisen, die beiderseits der Schlitzöffnung (61) um bzw. längs Biegelinien (73,74) spiegelbildlich zur Horizontalebene (H) um den Winkel (α) nach unten gebogen sind.

24. Handhängebahn nach einem oder mehreren der Ansprüche 14 bis 23, dadurch **gekennzeichnet**, daß der Winkel (β) größer als 15° und kleiner als 75° ist.

25. Handhängebahn nach einem der Ansprüche 16 bis 24, dadurch **gekennzeichnet**, daß der Winkel (β) 45° beträgt.

## Claims

1. A manually driven overhead conveyor for internal use in the clothing industry, having
   – a substantially box-shaped rail section (1) with a top wall section (15), two side wall sections (16,17) and two base wall sections (8,9) located beneath and closing off the above, which form between them a longitudinal median slot (11),
   – and an axle mounting (10) located within the rail section (1) having a pair of cylindrical running rollers (6,7) rotatably mounted thereon and a hanging bar (12) connected thereto and passing downwards through the slot opening in the rail section to means for the carriage of goods,
   – wherein the free end regions (2,3) of the two mirror image base walls (8,9) of the rail section (1), each directed towards the vertical longitudinal median plane (E) of the rail section (1) on either side of the slot opening (11), form running surfaces (2a,3a) for each of the two running rollers (6,7),
   – wherein at least the running surfaces (2a,3a) for the running rollers (6,7) forming regions of the base wall sections (8,9) facing each other at an angle (α) to the horizontal plane (H) of the base wall sections (8,9) are angled upwards and inwards,
   – and wherein the axle mounting (10) comprises a crosspiece running transversely to the direction of the rail (1) with mountings (4,5) each taking one running roller (6,7) at its ends, the axes of which (A′,A″) are angled in mirror image form to the vertical longitudinal median plane of the rail section (1) downwards and outwards at an angle (α) to the horizontal plane (H) and to the two running surfaces (2a,3a) in parallel pairs so that the running rollers run with their full running width (R) on the running surfaces,
   characterised in that the space between the free edges (13,14) of the end regions (2,3) of the two base wall sections (8,9) defining the slot opening (11) and the top wall section (15) is dimensioned so that with little clearance it is at least as large as the largest distance ($V_H$) between the upper edge of the crosspiece (10) or the highest point of the inner edge (6i, 7i) of the running rollers (6,7) and the lowest point of the outside edge (6a,7a) of the running rollers (6,7) and the gap width (B) of the slot opening (11) in the rail section (1) is dimensioned to be as large with little clearance as the diameter (D) of the two running rollers (6,7).

2. A manually driven overhead conveyor according to Claim 1, characterised in that the width of the space (W) in the rail section (1) is dimensioned to be as large with little clearance as the greatest width ($w_b$) measured across the two running rollers (6, 7).

3. A manually driven overhead conveyor according to either of claims 1 or 2, characterised in that the hanging bar (12) attached to the crosspiece (10) is centrally mounted longitudinally and passes centrally through the slot opening (11) in the rail section (1) as a result of self-centering of the two running rollers (6,7) mounted on the crosspiece (10) on their running surfaces (2,3).

4. A manually driven overhead conveyor according to one or more of Claims 1 to 3, characterised in that the carriage (25) formed from the crosspiece (10), the supporting bar (12) non-rotatably fixed to the latter and the two running rollers (6,7) mounted on the crosspiece (10) can be removed downwards from out of the rail section (1) at any point along the rail section (1) by lifting it, rotating the axis (A) of the hanging bar (12) through 90° and lowering it through the slot opening (11).

5. A manually driven overhead conveyor according to one or more of Claims 1 to 4, characterised in that the lower end of the hanging bar (12) is flexibly connected to a longitudinal drawbar (18).

6. A manually driven overhead conveyor according to Claim 5, characterised in that the drawbar (18) is mounted on the lower end of the hanging bar (12) in such a way that it can swing about its axis (A) through at least 90°.

7. A manually driven overhead conveyor according to Claim 6, characterised in that the lower end of the hanging bar (12) is drilled with a hole (19) for the drawbar (18) and is provided with a releasable securing member (20) mounted beneath in order to secure the drawbar (18) in its working position.

8. A manually driven overhead conveyor according to Claim 7, characterised in that the hanging bar (12) and the hole (19) provided for the drawbar (18) are of circular shape in cross-section.

9. A manually driven overhead conveyor according to Claim 7 or 8, <u>characterised in that</u> the securing member (20) consists of a screw, a split-pin or the like.

10. A manually driven overhead conveyor according to one or more of Claims 1 to 9, <u>characterised in that</u> the base walls sections (8,9) which each run parallel to the horizontal plane (H) and are bent inwardly at right angles along the bending lines (21,22) provided on the two side wall sections (16, 17) have and portions (2, 3) which are bent through an angle ( ) to the horizontal plane (H) in mirror image form along the bending lines (23,24) and form running surfaces (2a,3a).

11. A manually driven overhead conveyor according to one or more of Claims 1 to 10, <u>characterised in that</u> the base wall sections (8a,9a) provided on the two side wall sections (16a,17a) are each bent through an angle ($\alpha$) to the horizontal plane (H) in mirror image fashion along the bending lines (27,28) and form end portions (2,3) with running surfaces (2a,3a) for the running rollers (6,7).

12. A manually driven overhead conveyor according to one of Claims 1 to 11, <u>characterised in that</u> the angle ($\alpha$) is greater than 15° and smaller than 75°.

13. A manually driven overhead conveyor according to Claim 12, <u>characterised in that</u> the angle ($\alpha$) is 45°.

14. A manually driven overhead conveyor for internal use in the clothing industry, having
  – a substantially box-shaped rail section (1) with a top wall section (15), two side wall sections (16,17) and two base wall sections (8,9) angles towards the vertical median longitudinal plane (E) beneath and closing off the above, which form between them a median longitudinal slot (11),
  – with an axle mounting (60) located within the rail section (1) with a pair of cylindrical running rollers (6,7) rotatably mounted thereon and a hanging bar (12) attached thereto and passing downwards through the slot opening (11) in the rail section (1) to a carriage for the carriage of goods,
  – wherein the free end portions (52,53) of the two base wall sections (58,59) which are directed in mirror image fashion towards the vertical longitudinal median plane (E) of the rail section (51) on either side of the slot opening (61) in the rail section (51) form running surfaces (52a,53a) for each of the two running rollers (56,57),
  – in which at least the running surfaces (52a,53a) for the running rollers (56,57) form parts of the base wall sections (58,59) which face each other and are bent obliquely to the horizontal plane (H) of the base wall sections (58,59),
  – and wherein the axle mounting (60) is a crosspiece transverse to the direction of the running rail (51) with mountings (54,55) at its ends each taking a running roller (56,57) whose axes (B′,B″) are arranged in mirror image fashion to the longitudinal median plane (E) of the rail section (51) and are inclined horizontally to the horizontal plane (H) and angled parallel to the two running surfaces (52a,53a) in pairs so that the full running width (R) of the running rollers runs on the running surfaces,
<u>characterised in that</u> the running surfaces (52a,53a) are angled obliquely downwards, the axes (B′,B″) of the running rollers (56,57) are angled obliquely upwards and the gap width (F) of the slot opening (61) in the rail section (51) is dimensioned to be as large with little clearance as the diameter (G) of the two running rollers (56,57).

15. A manually driven overhead conveyor according to Claim 16, <u>characterised in that</u> the gap width ($K_1$) in the rail section (51) is dimensioned to be as large with little clearance as the greatest width ($K_2$) measured across the two running rollers (56,57).

16. A manually driven overhead conveyor according to Claim 14 or 15, <u>characterised in that</u> the hanging bar (62) on the crosspiece (60) is mounted longitudinally centrally and passes longitudinally centrally through the slot opening (61) in the rail section (51) as a result of the self-centering of the two running rollers (56,57) mounted on the crosspiece (60) on their running surfaces (52a,53a).

17. A manually driven overhead conveyor according to one or more of Claims 14 to 16, <u>characterised in that</u> a carrying member (25) consisting of the crosspiece (60), a hanging bar (62) non-rotatably fixed to the latter and two running rollers (56,57) mounted on the crosspiece (60) can be removed from the rail section (51) at any desired point by lifting it, rotating it through 90° about the axis (A) of the hanging bar (62) and lowering it downwards out of the rail section (51) through the slot opening (61).

18. A manually driven overhead conveyor according to one or more of Claims 14 to 17, <u>characterised in that</u> a drawbar (68) is flexibly attached to the lower end of the hanging bar (62).

19. A manually driven overhead conveyor according to one or more of Claims 14 to 18, <u>characterised in that</u> the drawbar (68) is attached to the lower end of the hanging bar (62) so that it can swing through at least 90° about its axis (A).

20. A manually driven overhead conveyor according to Claim 19, <u>characterised in that</u> the lower end of the hanging bar (62) is drilled with a hole (69) for the drawbar (68) and is provided with a releasable securing member (70) mounted beneath the drawbar (68) to secure it in its operating position.

21. A manually driven overhead conveyor according to Claim 20, <u>characterised in that</u> the hanging bar (62) and the hole (69) provided in the draw bar (68) are of circular cross-section.

22. A manually driven overhead conveyor according to Claim 21, <u>characterised in that</u> the securing member (70) is a screw, a split-pin or the like.

23. A manually driven overhead conveyor according to either of Claim 21 or 22, <u>characterised in that</u> the base wall sections (58,59) which are inclined to the horizontal plane H by an angle (β) on the two side wall sections (66,67) and bent inwards at right angles along the bending lines (71,72) form running surfaces (52a,53a) and have end portions (52,53) which are bent downward through an angle (β) to the horizontal plane (H) in mirror image fashion along bending lines (73,74) on either side of the slot opening (61).

24. A manually driven overhead conveyor according to one or more of Claims 14 to 23, <u>characterised in that</u> the angle (β) is larger than 15° and smaller than 75°.

25. A manually driven overhead conveyor according to one of Claims 16 to 24, <u>characterised in that</u> the angle (β) is 45°.

## Revendications

1. Transporteur manuel suspendu pour des transports internes, suspendus, dans l'industrie du vêtement, comportant
   – un rail profilé de roulement (1), essentiellement en forme de caisson, comportant une paroi supérieure (15) de profilé, deux parois latérales (16, 17), ainsi que deux parois de fond (8, 9) raccordées en bas à celles-ci, formant un angle vers le plan longitudinal central (E) et créant entre elles, au centre, une fente ouverte (11) dirigée longitudinalement,
   – et un support d'axes (10), disposé à l'intérieur du rail profilé de roulement (1) formant caisson, comportant un couple de galets de roulement (6, 7) cylindriques, montés tournant sur ce support d'axes, et une tige support (12), raccordée à ce dernier et traversant la fente ouverte du rail profilé de roulement, pour un chariot porteur pour recevoir le produit à transporter,
   – étant entendu que les zones d'extrémité libres (2, 3) des deux parois de fond (8, 9) du rail profilé de roulement (1), disposées de part et d'autre de la fente ouverte (11), chacune étant orientée vers le plan longitudinal central (E) vertical du rail profilé de roulement (1), et réalisées symétriquement, forment des surfaces de roulement (2a, 3a) pour chacun des deux galets de roulement (6, 7),
   – étant entendu qu'au moins les zones des parois de fond (8, 9) constituant les surfaces de roulement (2a, 3a) pour les galets de roulement (6, 7) sont, chacune, inclinées vers le haut d'un angle (α) par rapport au plan horizontal (H) des parois de fond (8, 9), en se rapprochant l'une de l'autre, et sont repliées vers l'intérieur,
   – et étant entendu que le support d'axes (10) est une traverse disposée perpendiculairement à la direction de déplacement du rail de roulement (1), et comporte, à chacune de ses extrémités, des tourillons de palier (4, 5), pour recevoir chacun un des galets de roulement (6, 7), dont les axes (A', A″) sont dirigés chacun symétriquement vers le bas et vers l'extérieur par rapport au plan longitudinal vrertical central (E), avec un angle (α) avec le plan horizontal (H), et disposés chacun deux à deux parallèlement aux deux surfaces de roulement (2a, 3a), de telle façon que les galets de roulement roulent sur les surfaces de roulement sur toute leur largeur (B),
   caractérisé en ce que la distance libre entre les arêtes libres (13, 14), délimitant la fente ouverte (11), des zones d'extrémité (2, 3) des deux parois de fond (8, 9) et la paroi supérieure (15) du profilé est au moins aussi grande, mesurée avec un jeu faible, que la plus grande distance ($V_H$) entre l'arête supérieure de la traverse (10), ou le point le plus haut des arêtes intérieures (6i, 7i) des galets de roulement (6, 7), et le point le plus bas des arêtes extérieures (6a, 7a) des galets de roulement (6, 7), et en ce que la largeur libre (B), mesurée avec un jeu faible, de la fente ouverte (11) est au moins aussi grande que le diamètre (D) des deux galets de roulement (6, 7).

2. Transporteur manuel suspendu suivant la revendication 1, caractérisé en ce que la largeur libre ($W_S$) du rail profilé de roulement, mesurée avec un jeu faible, est au moins aussi grande que la plus grande largeur ($W_B$) mesurée sur les des deux galets de roulement (6, 7).

3. Transporteur manuel suspendu suivant la revendication 1 ou la revendication 2, caractérisé en ce que la tige support (12) est placée centrée longitudinalement sur la traverse (10) et en ce que, sous l'effet d'autocentrage des deux galets de roulement (6, 7) montés sur la traverse (10) sur leur surfaces de roulement (2, 3), elle traverse, centrée longitudinalement, la fente ouverte (11) du rail de roulement (1).

4. Transporteur manuel suspendu suivant l'une quelconque ou plusieurs des revendications 1 à 3, caractérisé en ce qu'un organe porteur (25), constitué de la traverse (10), de la tige support (12) montée fixe sur cette dernière, et des deux galets de roulement (6, 7) montés sur la traverse (10), peut être enlevé du rail profilé de roulement (1), en tout point de ce rail de roulement que l'on désire, en le soulevant, en le faisant tourner autour de l'axe (A) de la tige support (12) et en le tirant vers le bas au travers de la fente ouverte (11).

5. Transporteur manuel suspendu suivant la revendication 4, caractérisé en ce qu'à l'extrémité inférieure de la tige support (12), une barre porteuse (18) longitudinale est fixée par articulation.

6. Transporteur manuel suspendu suivant la revendication 5, caractérisé en ce que barre porteuse (18) longitudinale est montée à l'extrémité inférieure de la tige support (62) en pouvant pivoter d'au moins 90° autour de son axe (A).

7. Transporteur manuel suspendu suivant la revendication 6, caractérisé en ce que l'extrémité inférieure de la tige support (12) traverse un alésage (19) réalisé dans la barre porteuse longitudinale (18) et, pour garantir la position d'utilisation de la barre porteuse longitudinale (18), est équipée d'un organe de sécurité démontable (20), situé en-dessous d'elle.

8. Transporteur manuel suspendu suivant la revendication 7, caractérisé en ce que la tige support (12), ainsi que l'alésage (19) prévu dans la barre porteuse longitudinale (18), ont une section circulaire.

9. Transporteur manuel suspendu suivant la revendication 7 ou la revendication 8, caractérisé en ce que l'organe de sécurité démontable (20) est une vis, une goupille ou similaire.

10. Transporteur manuel suspendu suivant l'une quelconque ou plusieurs des revendications 1 à 9, caractérisé en ce que les parois de fond (8, 9) du profilé, prévues contre les deux parois latérales (16, 17) du profilé, repliées vers l'intérieur à angle droit le long des lignes de pliage (21, 22) et s'étendant chacune parallèlement au plan horizontal (H), présentent des zones d'extrémité (2, 3) qui sont repliées d'un angle ($\alpha$), symétriquement par rapport au plan horizontal (H), le long des lignes de pliage (23, 24) et forment des surfaces de roulement (2a, 3a).

11. Transporteur manuel suspendu suivant l'une quelconque ou plusieurs des revendications 1 à 10, caractérisé en ce que les parois de fond (8a, 9a) du profilé, prévues sur les deux parois latérales (16a, 17a) sont repliées chacune le long des lignes de pliage (27, 28) vers l'intérieur d'un angle ($\alpha$), symétriquement par rapport au plan horizontal (H), et forment des zones d'extrémité (2, 3) comportant des surfaces de roulement (2a, 3a) pour les galets de roulement (6, 7).

12. Transporteur manuel suspendu suivant l'une quelconque des revendications 1 à 11, caractérisé en ce que l'angle ($\alpha$) est plus grand que 15° et plus petit que 75°.

13. Transporteur manuel suspendu suivant la revendication 12, caractérisé en ce que l'angle ($\alpha$) est de 45°.

14. Transporteur manuel suspendu pour les transports internes suspendus, dans l'industrie du vêtement, comportant

– un rail profilé de roulement (1), essentiellement en forme de caisson, comportant une paroi supérieure (15) du profilé, deux parois latérales (16, 17), ainsi que deux parois de fond (8, 9) raccordées en bas à celles-ci, formant un angle en se rapprochant du plan longitudinal central (E) et créant entre elles, au centre, une fente ouverte (11) ayant une direction longitudinale,

– et un support d'axes (60), disposé à l'intérieur du rail profilé de roulement (1) formant caisson, comportant un couple de galets de roulement (6, 7) cylindriques, montés tournant sur ce support d'axes, et une tige support (12), raccordée à celui-ci et traversant la fente ouverte du rail profilé de roulement, pour un chariot porteur pour recevoir le produit à transporter,

– étant entendu que les zones d'extrémité libres (52, 53) des deux parois de fond (8, 9) du rail profilé de roulement (51), disposées de part et d'autre de la fente ouverte (61), chacune dirigée en se rapprochant du plan longitudinal central (E) vertical du rail profilé de roulement (51) et réalisées symétriquement, forment des surfaces de roulement (52a, 53a) pour chacun des deux galets de roulement (6, 7),

– étant entendu qu'au moins les zones des parois de fond (58, 59,), constituant des surfaces de roulement (52a, 53a) pour les galets de roulement (56, 57), sont chacune repliées, inclinées vers le plan horizontal (H) des parois de fond (58, 59) du profilé, en se rapprochant l'une de l'autre,

– et étant entendu que le support d'axes (60) est une traverse disposée perpendiculairement à la direction de déplacement du rail de roulement (51), comportant, à chacune de ses extrémités, des tourillons de palier (54, 55), pour recevoir chacun un des galets de roulement (56, 57), dont les axes (B′, B″) forment un angle et sont dirigés chacun symétriquement par rapport au plan longitudinal vertical central (E), inclinés par rapport au plan horizontal (H), et repliés chacun deux à deux parallèlement aux deux surfaces de roulement (52a, 53a), de telle façon que les galets de roulement roulent sur les surfaces de roulement sur toute leur largeur (B),

caractérisé en ce que les surfaces de roulement (52a, 53a) sont disposées en formant un angle vers le bas, en ce que les axes (B′, B″) des galets de roulement (56, 57) forment un angle d'inclinaison vers le haut et que la largeur libre (F) de la fente ouverte (61) du rail profilé de roulement (51) est au moins aussi grande, mesurée avec un faible jeu, que le diamètre (G) des deux galets de roulement (56, 57).

15. Transporteur manuel suspendu suivant la revendication 16, caractérisé en ce que la largeur libre ($K_1$)

du rail profilé de roulement (51), mesurée avec un jeu faible, est au moins aussi grande que la plus grande largeur ($K_2$) mesurée sur les deux galets de roulement (56, 57).

16. Transporteur manuel suspendu suivant la revendication 14 ou la revendication 15, caractérisé en ce que la tige support (62) est placée centrée longitudinalement sur la traverse (10) et en ce que, sous l'effet d'autocentrage des deux galets de roulement (56, 57) montés sur la traverse (60) sur leur surfaces de roulement (52a, 53a), elle traverse, centrée longitudinalement, la fente ouverte (61) du rail de roulement (51).

17. Transporteur manuel suspendu suivant l'une quelconque ou plusieurs des revendications 14 à 16, caractérisé en ce qu'un organe porteur (25), constitué de la traverse (60), de la tige support (62) montée fixe sur cette dernière, et des deux galets de roulement (56, 57) montés sur la traverse (60), peut être enlevé du rail profilé de roulement (51), en tout point de ce rail de roulement que l'on désire, en le soulevant, en le faisant tourner de 90° autour de l'axe (A) de la tige support (62) et en le retirant vers le bas, au travers de la fente ouverte (61), du rail de roulement (51).

18. Transporteur manuel suspendu suivant l'une quelconque ou plusieurs des revendications 14 à 17, caractérisé en ce qu'à l'extrémité inférieure de la tige support (62), une barre porteuse (68) longitudinale est fixée par articulation.

19. Transporteur manuel suspendu suivant l'une quelconque ou plusieurs des revendications 14 à 18, caractérisé en ce que la barre porteuse (68) longitudinale est montée à l'extrémité inférieure de la tige support (62) en pouvant pivoter d'au moins 90° autour de son axe (A).

20. Transporteur manuel suspendu suivant la revendication 19, caractérisé en ce que l'extrémité inférieure de la tige support (62) traverse un alésage (69) réalisé dans la barre porteuse longitudinale (68) et est équipée, pour garantir la position d'utilisation de la barre porteuse (68) longitudinale, d'un organe de sécurité démontable (70), situé en-dessous d'elle.

21. Transporteur manuel suspendu suivant la revendication 20, caractérisé en ce que la tige support (62), ainsi que l'alésage (69) prévu dans la barre porteuse longitudinale (68), a une section circulaire.

22. Transporteur manuel suspendu suivant la revendication 21, caractérisé en ce que l'organe de sécurité démontable (70) est une vis, une goupille ou similaire.

23. Transporteur manuel suspendu suivant la revendication 21 ou la revendication 22, caractérisé en ce que les parois de fond (58, 59) du profilé, prévues sur les deux parois latérales (66, 67), repliées chacune à angle droit vers l'intérieur le long des lignes de pliage (71, 72) et inclinées chacune symétriquement d'un angle ($\beta$) par rapport au plan horizontal (H), forment des surfaces de roulement (52a, 53a) et présentent des zones d'extrémité (52, 53) qui, de part et d'autre de la fente ouverte (61), sont repliées vers le bas symétriquement d'un angle ($\alpha$) par rapport au plan horizontal (H), autour et le long de lignes de pliage (73, 74).

24. Transporteur manuel suspendu suivant l'une quelconque ou plusieurs des revendications 14 à 23, caractérisé en ce que l'angle ($\beta$) est plus grand que 15° et plus petit que 75°.

25. Transporteur manuel suspendu suivant l'une quelconque ou plusieurs des revendications 16 à 24, caractérisé en ce que l'angle ($\beta$) est de 45°.

Fig.1

Fig.2